# EUROPEAN PATENT SPECIFICATION

(11) **EP 1 270 531 B1**
(45) Date of publication and mention of the grant of the patent: **24.01.2007**
(21) Application number: 01919815.9
(22) Date of filing: 06.04.2001
(51) Int. Cl.: C04B 35/16, B01D 39/20, F01N 3/28, C04B 35/195, C04B 38/00

(54) **CORDIERITE CERAMIC HONEYCOMB OF LOW THERMAL EXPANSION AND METHOD FOR MANUFACTURING THE SAME**
WABENFÖRMIGE CORDIERITKERAMIK MIT NIEDRIGER THERMISCHER AUSDEHNUNG UND VERFAHREN ZU IHRER HERSTELLUNG
STRUCTURE ALVEOLAIRE CERAMIQUE A CORDIERITE PRESENTANT UNE FAIBLE DILATATION THERMIQUE ET PROCEDE DE FABRICATION DE LADITE STRUCTURE

(30) Priority: 07.04.2000 JP 2000105875
(43) Date of publication of application: 02.01.2003
(73) Proprietor: NGK INSULATORS, LTD., Nagoya-City, Aichi Pref. 467-8530 (JP)
(72) Inventor: NOGUCHI, Yasushi, c/o NGK INSULATORS, LTD., Nagoya-shi, Aichi 467-8530 (JP); MAKINO, Kyoko, c/o NGK INSULATORS, LTD., Nagoya-shi, Aichi 467-8530 (JP)
(74) Representative: Paget, Hugh Charles Edward
(86) International application number: PCT/JP2001/003002
(87) International publication number: WO 2001/077042

(56) References cited:
- EP-A- 0 549 873
- EP-A1- 0 278 749
- EP-A1- 0 535 872
- EP-A1- 0 545 008
- EP-A1- 0 894 777
- EP-A1- 0 899 248
- EP-A2- 0 506 301
- WO-A-00/30995
- WO-A-99/28270
- JP-A- 2 111 659
- JP-A- 5 085 813
- JP-A- 11 236 262
- JP-A- 11 309 380
- US-A- 3 950 175

## Description

### Technical Field

The present invention relates to a low thermal expansion cordierite ceramic honeycomb and a method of producing the same, which can obtain a low thermal expansion honeycomb structural body.

### Background Arts

Generally, as a technique for obtaining a cordierite ceramic honeycomb structural body having a low thermal expansion coefficient, various techniques have been known. For example, in Japanese Patent Publication No. 5-82343 (JP-B-5-82343), there disclosed a cordierite ceramic honeycomb having properties such as a porosity: 30 - 42%, a thermal expansion coefficient along A-axis: not greater than 0.3×10⁻⁶/°C, and a thermal expansion coefficient along B-axis: not greater than 0.5×10⁻⁶/°C, which was produced by using talc having an average particle size of 5 - 100 µm, alumina having an average particle size of not greater than 2 µm, and a high-purity amorphous silica having an average particle size of not greater than 15 µm. Moreover, in Japanese Patent Publication No. 4-70053 (JP-B-4-70053), there disclosed a cordierite ceramic honeycomb having properties such as a porosity: not greater than 30%, a thermal expansion coefficient along A-axis: not greater than 0.8×10⁻⁶/°C, and a thermal expansion coefficient along B-axis: not greater than 1.0×10⁻⁶/°C, whose crystal amount is not lower than 90% of cordierite, not greater than 2.5% of mullite, and not greater than 2.5% of spinel (including sapphirine). Further, in Japanese Patent Laid-Open Publication No. 50-75611 (JP-A-50-75611), there disclosed a polycrystal sintered ceramic having property such as a thermal expansion coefficient in a temperature range of 25 - 1000 °C of not greater than 1.1×10⁻⁶/°Cm whose crystal phase is cordierite of orthorhombic system (or cordierite of hexagonal system known as indialite) as a main crystal phase.

In the case of producing a thin wall honeycomb that is highly required recently, whose rib thickness is not greater than 100 µm, it is preferred to have a porosity of not lower than 30% so as to easily coat a catalyst to the thin wall honeycomb. Moreover, it is necessary to exclude a coarse particle component having a diameter not greater than a slit width of a die from raw material particles so as to prevent a failure of a rib. Further, it is required to have a low thermal expansion coefficient so as to maintain a thermal shock resistance. However, in the known techniques mentioned above, there are following problems. That is, a fine alumina having an average particle size of not greater than 2 µm has an advantage such that a thermal expansion coefficient decreases. On the other hand, in such a fine alumina, particles are strongly agglutinated, and thus it is difficult to classify particles. Therefore, it is not possible to remove the coarse particle component. In this case, the alumina coarse particle plugs the slit of the die during a honeycomb forming step, and this plugging causes a rib failure of the honeycomb. Moreover, there is a drawback such that a porosity of the cordierite ceramic honeycomb decreases since use is made of the fine alumina. Further, the high-purity amorphous silica has an advantage such that a thermal expansion coefficient decreases. On the other hand, the high-purity amorphous silica decreases a porosity of the cordierite ceramic honeycomb as compared with quartz silica, and also there is a drawback such that it is expensive.

### Disclosure of Invention

An object of the present invention is to eliminate the drawbacks mentioned above and to provide a low thermal expansion cordierite ceramic honeycomb and a method of producing the same, which can obtain a honeycomb structural body having a low thermal expansion coefficient.

According to the invention, a low thermal expansion cordierite ceramic honeycomb provided as set out in claim 1.

Moreover, according to the invention, a method of producing the low thermal expansion cordierite ceramic honeycomb mentioned above is provided, as set out in claim 4.

During a development of the known low thermal expansion ceramic, raw materials were varied so as to improve an orientation and a reaction of cordierite. However, in the present invention, crystal phases to be generated are controlled by controlling a temperature during a crystal generation (i.e. a temperature descending rate from a maximum temperature), so that a low thermal expansion coefficient can be achieved. As a crystal phase of cordierite, there are cordierite of orthorhombic system and cordierite of hexagonal system i.e. different phase of indialite. In the present invention, it is possible to decrease a thermal expansion coefficient by increasing an amount of cordierite and by decreasing an amount of indialite. Moreover, it is found that a ration between cordierite and indialite can be controlled by a temperature descending rate during a sintering step from the maximum temperature to a predetermined temperature.

### Brief Description of the Drawling

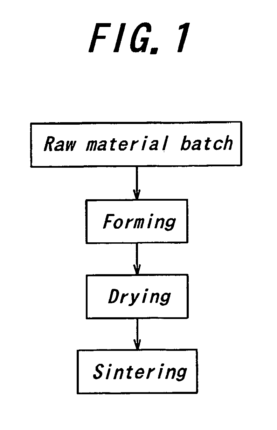

Fig. 1 is a flowchart showing one embodiment of a method of producing a cordierite ceramic honeycomb according to the invention.

### Best Mode for Carrying Out the Invention

The low thermal expansion cordierite ceramic honeycomb having the crystal phases mentioned above can be obtained according to the following producing method.

Fig. 1 is a flowchart showing one embodiment of a method of producing a cordierite ceramic honeycomb according to the invention. The method of producing the cordierite ceramic honeycomb will be explained with reference to Fig. 1. At first, a raw material batch for making cordierite is prepared. The raw material batch is obtained by adding and mixing forming agents such as soluble cellulose derivatives, surfactants, water and so on with respect to raw materials for making cordierite made of, for example, talc, kaolin, calcined kaolin, alumina, aluminum hydroxide and quartz. Then, the thus obtained raw material batch is extruded by using a die to obtain a honeycomb formed body having a cordierite composition. After that, the thus obtained honeycomb formed body is dried to obtain a honeycomb dried-up body. Finally, the cordierite ceramic honeycomb can be obtained by sintering the honeycomb dried-up body.

A feature of the producing method mentioned above is that, during the sintering step, a temperature descending rate at least from the maximum temperature to 1250°C is controlled to not greater than 50°C/hour. In the present invention, it is possible to produce a cordierite ceramic honeycomb having a low thermal expansion coefficient, which increases the cordierite crystal phase and decreases the indialite crystal phase, by controlling gradually the temperature descending rate during the sintering step from the maximum temperature in such a manner that it becomes not greater than 50°C/hour.

In the embodiment mentioned above, it is preferred to use quartz in the raw material batch for making cordierite and to use alumina having an average particle size greater than 2 µm. In the present invention, it is possible to use quartz silica instead of known high-purity amorphous silica. In this case, it is preferred since the quartz silica can increase porosity and reduce the cost as compared with the known high-purity amorphous silica. Moreover, the use of alumina having an average particle size greater than 2 µm is to make the porosity not lower than 30% and to prevent an inclusion of coarse particle component that is difficult to classify. Further, if the maximum temperature maintaining period is not lower than 6 hours, it is further preferred since the present invention can be achieved preferably.

The cordierite ceramic honeycomb according to the invention, which is obtained according to the producing method mentioned above, has an excellent low thermal expansion coefficient such that a thermal expansion coefficient along A-axis in a temperature range from 40°C to 800°C is not greater than 0.4×10⁻⁶/°C and a thermal expansion coefficient along B-axis is not greater than 0.6×10⁻⁶/°C, more preferably, such that a thermal expansion coefficient along A-axis is not greater than 0.3×10⁻⁶/°C and a thermal expansion coefficient along B-axis is not greater than 0.5×10⁻⁶/°C. Moreover, it is possible to set the porosity to not lower than 30%, and thus it is possible to easily coat a catalyst thereto. Therefore, the present invention can be applied preferably for producing a honeycomb structural body having a thickness of cell partition wall of not greater than 100 µm.

Hereinafter, actual examples will be explained.

According to the producing method mentioned above, a honeycomb dried-up body having a cordierite composition was produced by; mixing raw materials shown in the following Table 1 at a mixing proportion as shown in Table 1 to obtain a mixture; adding soluble cellulose derivatives, surfactants and water to the mixture; and admixing, kneading, extruding and drying the mixture in which forming agents are added.

**[Table 1]**

| Raw materials to be used and mixing proportion | | | |
|---|---|---|---|
| Raw materials | Average particle size (µm) | +45 µm screen residue (ppm) | Mixing proportion (wt%) |
| Talc | 9 | 12 | 40 |
| Kaolin | 8 | 5 | 18 |
| Calcined kaolin | 3 | 8 | 16 |
| Alumina | 5 | 14 | 10 |
| Aluminum hydroxide | 1.8 | 13 | 10 |
| Quartz | 4 | 7 | 6 |

Then, the thus obtained honeycomb dried-up body was sintered. The sintering of the honeycomb dried-up body was performed on the basis of sintering conditions shown in the following Table 2, at a maximum temperature during the sintering of 1425°C, by means of a commercially available kanthal furnace with programming function, so that honeycomb sintered bodies of reference examples R1, R2, R7, R8, R9 and examples 3-6 of the invention and comparative examples 21 - 24 were obtained. With respect to the thus obtained respective honeycomb sintered bodies, porosity and thermal expansion coefficients were measured, and crystal phases of respective honeycomb sintered bodied were quantified. The porosity of the honeycomb sintered body was measured in such a manner that overall total-pore volume was measured by a method of mercury penetration and the porosity was calculated from the thus measured total-pore volume. A true density of cordierite was estimated as 2.52 g/cm³. The measurement was performed by means of Auto Pore 9405 manufactured by Micromeritics,inc. Moreover, the thermal expansion coefficient of the honeycomb sintered body was measured in such a manner that average thermal expansion coefficients along A-axis and B-axis were measured respectively in a temperature range of 40 - 800°C. In this case, A-axis means an extruding direction of the honeycomb and B-axis means a direction perpendicular to the extruding direction and parallel to the honeycomb partition wall lines. The quantification of crystal phases in the honeycomb sintered body was performed according to Rietvelt method. As an internal standard substance, use was made of corundum powders manufactured by U.C. co. ltd., and the quantitative analysis of cordierite and indialite was performed. Small amount components such as sapphirine, spinel and mullite were measured in a quantitative manner by dissolving powders of the honeycomb sintered body by means of hydrofluoric acid to obtain a remainder and subjecting the remainder to the quantitative analysis according to Rietvelt method. The glass amount was measured by subtracting sum of crystal phase percentages of cordierite, indialite, sapphirine, spinel and mullite from 100%. The results are shown in the following Table 2.

**[Table 2]**

| Examples | | | | | | | | | | | | |
|---|---|---|---|---|---|---|---|---|---|---|---|---|
| | Sintering conditions | | | Porosity (%) | Thermal expansion coefficient (×10⁻⁶/°C) | | Crystal phase (%) | | | | | |
| No. | Maximum temperature maintaining period (hr) | Temperature descending rate (°C/hr) | Cooling temperature (°C) | | A-axis | B-axis | cordierite | indialite | sapphirine | spinel | mullite | glass |
| R1 | 12 | 100 | 1250 | 32.0 | 0.30 | 0.60 | 70.3 | 21.8 | 1.2 | 0.4 | 1.6 | 4.7 |
| R2 | 12 | 75 | 1250 | 32.3 | 0.27 | 0.57 | 73.6 | 18.6 | 1.8 | 0.3 | 1.3 | 4.4 |
| 3 | 12 | 50 | 1250 | 31.7 | 0.22 | 0.50 | 76.4 | 15.3 | 1.7 | 0.2 | 0.6 | 5.8 |
| 4 | 12 | 25 | 1250 | 31.9 | 0.24 | 0.52 | 80.1 | 13.2 | 1.3 | 0.3 | 0.8 | 4.3 |
| 5 | 12 | 25 | 1200 | 31.6 | 0.17 | 0.43 | 82.0 | 12.0 | 1.1 | 0.2 | 1.2 | 3.4 |
| 6 | 12 | 25 | 1000 | 31.3 | 0.20 | 0.48 | 82.5 | 11.9 | 1.2 | 0.2 | 0.9 | 3.3 |
| R7 | 6 | 25 | 1200 | 32.5 | 0.31 | 0.57 | 69.1 | 23.5 | 1.6 | 0.4 | 1.2 | 4.3 |
| R8 | 4 | 75 | 1200 | 33.1 | 0.40 | 0.61 | 62.2 | 28.7 | 1.4 | 0.4 | 2.4 | 4.9 |
| R9 | 12 | 100 | 1300 | 32.4 | 0.37 | 0.61 | 62.8 | 27.4 | 1.3 | 0.5 | 2.3 | 5.7 |
| 21 | 2 | 300 | 1250 | 31.7 | 0.57 | 0.77 | 49.7 | 39.3 | 1.1 | 0.5 | 3.3 | 6.1 |
| 22 | 12 | 150 | 1250 | 32.1 | 0.38 | 0.62 | 58.9 | 31.1 | 1.6 | 0.3 | 2.8 | 5.3 |
| 23 | 12 | 300 | 1250 | 31.7 | 0.46 | 0.65 | 53.5 | 36.5 | 1.3 | 0.4 | 3.0 | 5.3 |
| 24 | 12 | 100 | 1350 | 32.3 | 0.42 | 0.63 | 55.4 | 34.3 | 1.4 | 0.3 | 3.1 | 5.5 |

Reference examples R1, R2, R7, R8, R9 are outside the scope of the invention but are retained as they assist in an understanding of the invention.

If a cooling from the maximum temperature became slower, an amount of cordierite crystal phase was increased and the thermal expansion coefficients became lower reference examples R1, R2 and examples 3, 4. On the other hand, if the temperature descending rate became over 150°C/hour, an amount of cordierite crystal phase was decreased and the thermal expansion coefficients became higher (comparative examples 21 - 23). The gradual cooling from the maximum temperature was effective if it was performed in a temperature range from the maximum temperature to 1300°C (reference example R9). Further, if the gradual cooling from the maximum temperature was performed to 1200°C, it was more effective (example 5). However, even if the gradual cooling from the maximum temperature was performed to further lower temperature, it was not so effective (example 6). On the other hand, if the gradual cooling from the maximum temperature was performed only to 1350°C, an amount of cordierite crystal phase was decreased, and it was not effective (comparative example 24). If the maximum temperature maintaining period became longer, an amount of cordierite crystal phase was increased and the thermal expansion coefficients became lower. If the maximum temperature maintaining period was at least over 4 hours, an amount of cordierite crystal phase became over 60% and the lower thermal expansion coefficients were obtained (referred to example 5 and reference examples R2, R7, R8). If the maximum temperature maintaining period was short and the temperature descending rate was high as shown in the comparative example 21, an amount of cordierite crystal phase was less than 60% and extraordinarily high thermal expansion coefficients were obtained.

### Effect of the Invention

As clearly understood from the above explanations, according to the invention, since an amount of cordierite is increased and an amount of indialite is decreased, it is possible to obtain the low thermal expansion cordierite ceramic honeycomb, which decreases a thermal expansion coefficient.

## Claims

1. A low thermal expansion cordierite ceramic honeycomb **characterized in that** a cordierite crystal phase is not lower than 76.4% and an indialite crystal phase is not greater than 15.3%, wherein a sum of the cordierite crystal phase and the indialite crystal phase is not lower than 85%.

2. The low thermal expansion cordierite ceramic honeycomb according to claim 1, wherein a thermal expansion coefficient along A-axis is not greater than 0.4×10⁻⁶/°C.

3. The low thermal expansion cordierite ceramic honeycomb according to claim 1, wherein a thickness of a partition wall of a cell is not greater than 100 µm.

4. A method of producing the low thermal expansion cordierite ceramic honeycomb according to one of claims 1 - 3, having the steps of mixing raw materials and forming agents to obtain a raw materials batch, extruding and drying the raw material batch to obtain a formed body, and sintering the formed body, **characterized in that**, during the sintering step, a temperature descending rate at least from a maximum temperature to 1250°C is not greater than 50°C/hour.

5. The method of producing the low thermal expansion cordierite ceramic honeycomb according to claim 4, wherein a period for maintaining at the maximum temperature is not lower than 6 hours.

## Patentansprüche

1. Cordierit-Keramikwabenstruktur mit geringer thermischer Ausdehnung **dadurch gekennzeichnet, dass** eine Cordierit-Kristallphase nicht kleiner als 76,4% und eine Indialit-Kristallphase nicht größer als 15,3% ist, worin die Summe aus Cordierit-Kristallphase und Indialit-Kristallphase nicht weniger als 85% beträgt.

2. Cordierit-Keramikwabenstruktur mit geringer thermischer Ausdehnung nach Anspruch 1, worin der thermische Ausdehnungskoeffizient entlang einer A-Achse nicht mehr als 0,4x10⁻⁶/°C beträgt.

3. Cordierit-Keramikwabenstruktur mit geringer thermischer Ausdehnung nach Anspruch 1, worin die Dicke einer Zwischenwand einer Zelle nicht größer als 100 µm ist.

4. Verfahren zur Herstellung der Cordierit-Keramikwabenstruktur mit geringer thermischer Ausdehnung nach einem der Ansprüche 1 bis 3, umfassend die Schritte des Mischens der Rohmaterialien und der Formmittel, um eine Rohmaterialcharge zu bilden, des Extrudierens und Trocknens der Rohmaterialcharge, um einen Formkörper zu erhalten und des Sinterns des Formkörpers, **dadurch gekennzeichnet, dass**, während des Sinterschritts, die Temperaturabnahmerate zumindest von einer Maximaltemperatur auf 1250°C nicht mehr als 50°C/Stunde aufweist.

5. Verfahren zur Herstellung der Cordierit-Keramikwabenstruktur mit geringer thermischer Ausdehnung nach Anspruch 4, worin die Zeitspanne der Beibehaltung der Maximaltemperatur nicht weniger als 6 Stunden andauert.

## Revendications

1. Nid-d'abeilles de céramique et de cordiérite à faible dilatation thermique **caractérisé en ce qu'**une phase cristalline de cordiérite ne représente pas moins de 76,4% et une phase cristalline d'indialite ne représente pas plus de 15,3% où une somme de la phase cristalline de cordiérite et de la phase cristalline d'indialite ne représente pas moins de 85%.

2. Nid-d'abeilles de céramique de cordiérite à faible dilatation thermique selon la revendication 1, où un coefficient de dilatation thermique le long d'un axe A ne dépasse pas 0,4x10⁻⁶/°C.

3. Nid-d'abeilles de céramique de cordiérite à faible dilatation thermique selon la revendication 1, où une épaisseur d'une paroi de séparation d'une alvéole n'est pas plus grande que 100 µm.

4. Méthode de production du nid-d'abeilles de céramique de cordiérite à faible dilatation thermique selon l'une quelconque des revendications 1-3, ayant les étapes de mélanger des matières premières et des agents de mise en forme pour obtenir un lot de matières premières, d'extruder et de sécher le lot de matières premières pour obtenir un corps formé et de fritter le corps formé, **caractérisée en ce que**, pendant l'étape de frittage, une vitesse de descente de température au moins d'une température maximale à 1250°C n'est pas supérieure à 50°C/heure.

5. Méthode de production d'un nid-d'abeilles de céramique de cordiérite à faible dilatation thermique selon la revendication 4 où une période de maintien la température maximale n'est pas plus faible que 6 heures.
